# EUROPEAN PATENT APPLICATION

(11) **EP 3 061 620 A1**
(43) Date of publication of application: **31.08.2016**
(21) Application number: 15176954.4
(22) Date of filing: 16.07.2015
(51) Int. Cl.: B41M 5/24, B41M 7/00, B29D 23/00

(54) **A TUBULAR HOSE HAVING AN EXTERNAL LAYER PROVIDED WITH A CODE AND A METHOD FOR THE MANUFACTURE THEREOF**

(30) Priority: 25.02.2015 US 201514631320
(71) Applicant: Venair Inc., Miami Gardens, FL 33169 (US)
(72) Inventor: SIGLER POVEDA, Javier, 08206 SABADELL (ES); FERRER SERRANO, Norma, 08026 BARCELONA (ES)
(74) Representative: Sugrañes Patentes y Marcas

(57) **Abstract**

A tubular hose for transporting fluids in industrial installations and a method for the manufacture thereof. The tubular hose includes an external layer of a polymeric material, preferably silicone, provided with a code, intaglio engraved using a laser on the external surface of the external layer formed by a plurality of grooves arranged according to a pattern of the code. The grooves are at least partially filled with a filler material with a colored polymeric base which produces a visual contrast with the rest of the external surface of the external layer. The code is preferably a two-dimensional code.

## Description

### Background of the invention

The use of flexible tubular hoses, mainly manufactured with silicone, is widely used in the sector of the industry for transporting fluids of different types which may be subjected to extreme temperatures and to high pressures. An example of a flexible tubular hose is that formed by an internal layer, which forms the internal surface of the tube, proceeding from which there are provided various concentric tubular layers consisting of reinforcing and silicone materials, finishing with an external layer, also made of silicone.

Due to the great number of flexible tubular hoses in one single installation or within an industry, it is necessary to identify them expediently, not just by the function of the hose or the type of fluid or gas which it is going to transport for its assembly verification, but also for the data of the hose per se, such as for example the characteristics of its materials, its origin and date of manufacture or any other relevant data regarding the life of the hose, with the aim of determining whether it can be maintained, be reused in another installation or whether it must be replaced.

The use of plastic or metallic labels adhered to the external surface of the hoses is impractical due to the conditions of use of the hoses themselves, subjected to frictions, impacts, high pressures and temperatures, which leads to the damage or loss of the label. Another option, which has shown improved results, is the use of electronic labels inserted between the layers of material of which the flexible tubular hose is made, although there is the drawback of having to insert the electronic label during the manufacturing process of the flexible tubular hose, which does not apply to hoses which have already been manufactured.

It would be desirable to provide flexible tubular hoses which carry the necessary associated information for the identification thereof and for the tracking at all times of the hoses, independently of the external conditions to which the hoses are subjected, facilitating the access to said information and the integrity thereof.

### Summary of the invention

With the object of providing a solution to the problems set out, a tubular hose to be used for transporting fluids in industrial installations is made known. Said industrial installations include installations in the field of food, chemistry and pharmaceutical industries. The hose comprises an external layer made of a polymeric material provided with a code, intaglio engraved using a laser on the external surface of the external layer formed by a plurality of grooves arranged according to a pattern of the code. The grooves are at least partially filled with a filler material with colored polymeric base which produces a visual contrast with the rest of the external surface of the external layer.

Preferably the polymeric material of the external layer of the tubular hose is silicone and the filler material is an ink which comprises silicone. This ink, since it is composed of silicone, creates a bond with the silicone of the external layer of the hose and thus adheres perfectly.

The ink of the filler material, depending on its formulation, is either curable or not by temperature, that is to say, hardens with the application of heat. For example, according to a preferred embodiment of the invention, the ink is cured at a temperature of between 100 °C and 180 °C by means of any heat source, during a period of approximately between 3 and 15 minutes.

According to another characteristic of the invention, the filler material may completely occupy the hollow of the grooves until it is level with the rest of the surface of the external layer.

The code engraved using the laser can be a one-dimensional code but preferably, the engraved code is a matrix or two-dimensional code, such as a QR-code code, a DataMatrix code, a Cool-Data-Matrix code, an Aztec code, a Shotcode code, etc. This engraved code contains the information necessary for each end client of the tubular hose, that is to say, the information contained is personalizable as a function of their requirements.

According to another characteristic of the invention, the depth of the grooves which form the code is between 0.001 mm and 1 cm.

In accordance with another characteristic of the invention, the hose is preferably a flexible hose, although according to other embodiments of the invention, the hose may be rigid or of any other structure.

According to another aspect of the invention, the invention also provides a method for manufacturing a tubular hose provided with a code as the hose previously described, wherein the method comprises the steps of:
a) providing a tubular hose comprising an external layer made of a polymeric material;
b) intaglio engraving a code, using a laser on the external surface of the external layer, forming a plurality of grooves arranged according to a pattern of the code; and
c) at least partially filling the grooves which form the code with a filler material with a colored polymeric base which produces a visual contrast with the rest of the external surface of the external layer.

The engraving of the code in step b) is realized using a laser tube applying a laser beam displacement technique. Preferably the engraved code is a two-dimensional code, such as a QR-Code code, and the depth of the grooves realized using the laser may be from 0.001 mm to 1 cm.

According to another characteristic of the method, the polymeric material of the external layer is silicone and the filler material is an ink comprising silicone.

In accordance with a variant of the invention, the ink of the filler material is curable by temperature and after step c) follows step d) for curing the ink in which the hose, or at least the part of the hose which comprises the code, is exposed to the action of a heat source by way of which the hose or the cited part of the hose reaches the curing temperature of the ink of the filler material.

Preferably, the curing temperature of the filler material is between 100 °C and 180 °C. According to the preferred variant of the invention, the ink of the filler material is cured at 160 °C over a period of between 3 and 15 minutes. The curing of the ink may be carried out by means of any known suitable heat source, for example an oven.

Also in a preferred manner, in step c), the hollow of the grooves formed by the laser is completely filled with the filler material until it is level with the rest of the surface of the external layer of the tubular hose.

The method which is the object of the invention is applicable to flexible tubular hoses but also to rigid hoses, as long as they have an external silicone layer.

### Brief description of the drawings

In the attached drawings, an embodiment of the tubular hose which is the object of the invention according to the method for the manufacture thereof is shown in an exemplary and non-limiting manner. In said drawings:
Fig. 1 is a perspective view of a section of the hose which is the object of the invention in which the laser has just engraved a two-dimensional code, particularly a QR-Code code, on the external surface according to step b) of the method;
Fig. 2 is a perspective view of a section of the hose shown in Fig. 1 but in which the grooves of the two-dimensional code have been filled with a filler material according to step c) of the method;
Fig. 3 is sectional view of a section of another hose which is the object of the invention according to a cut plane parallel to the longitudinal direction thereof and which traverses the code which is the object of the invention, when step b) of the method has been finalized, in which the laser has just engraved the two-dimensional code on the external surface of the hose;
Fig. 4 is a detailed view of the upper part of Fig. 3 with the difference being that the grooves have been completely filled with a filler material according to step c) of the method; and
Fig. 5 is a similar view to Fig. 4 with the difference being that the grooves have been partially filled with a filler material.

### Detailed description of the drawings

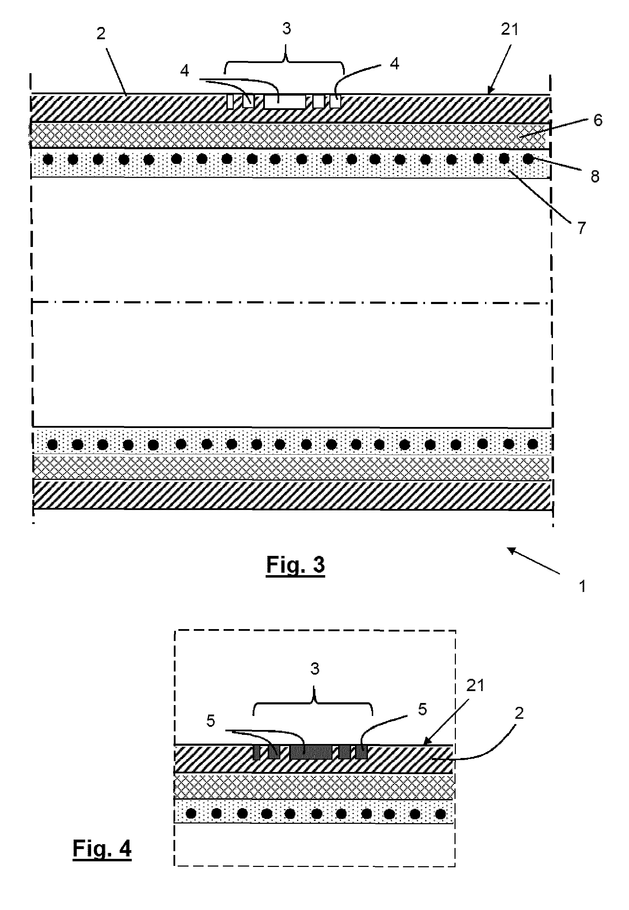

Fig. 3 shows the longitudinal section of a section of the tubular hose 1 which is the object of the invention to be used for transporting fluids in industrial installations. The hose 1 is formed by various layers, the external layer 2 being manufactured from a polymeric material, in particular silicone. The rest of the layers may be made of different materials and/or structure, according to the requirements of the hose 1. For example, the internal layer 7 may also be manufactured from silicone and the hose 1 may be provided with an intermediate reinforcing layer 6 made of metal or another polymeric material such as a braided or polyester wire mesh structure. The hose may also include between its layers a metallic helicoidal reinforcement 8, for example made of stainless steel, iron or wire.

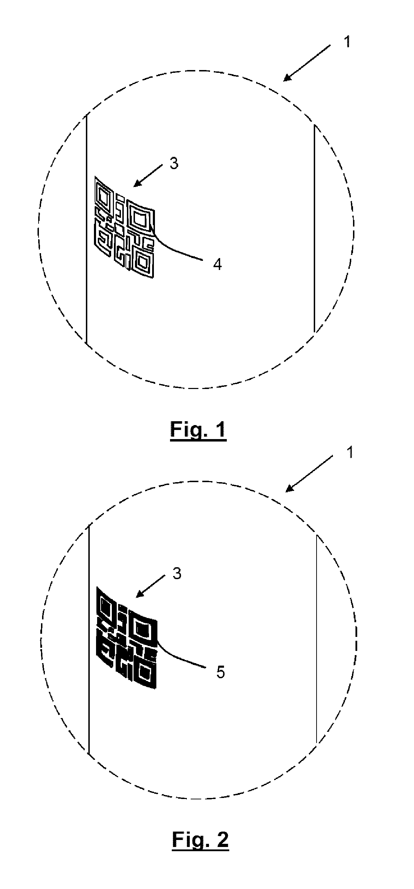

It is observed in Fig. 3 that the external surface 21 of the external layer 2 has a plurality of grooves 4. The arrangement of these grooves 4 follows the pattern of a two-dimensional code 3, particularly the pattern of a QR-Code code 3 as the one shown in the hose in Fig. 1. The grooves 4 are the result of the intaglio engraving of the two-dimensional code 3 using a laser on the external surface 21, particularly using a laser tube by means of the beam displacement technique.

Laser tube is understood to be a hermetically sealed receptacle, already known, which mainly contains CO₂, in addition to other gases such as nitrogen, hydrogen or helium. The ends of the receptacle are provided with respective mirrors, one of which being partially transparent. The gas in the interior of the tube is activated by means of electrical energy, produced by a radio frequency unit and emits energy in the form of light. One part of this light - the more intense part - exits through the partially transparent mirror and forms the beam of the laser. The other part of the light bounces and returns back, gathering intensity.

The technique normally used to realize a marking or engraving by means of the use of a laser tube is by means of the displacement of the beam. Using this technique, a medium-strength laser beam is focused on the surface to be marked. The beam is orientated by means of a combination of galvanometric mirrors such that it follows the course of the design to be marked, in this case, the design of the pattern of the two-dimensional code 3.

Prior to engraving the two-dimensional code 3 using the laser, the two-dimensional code 3 is generated using the information necessary for each client of the user of the hose 1 to be manufactured, that is to say, the information which the two-dimensional code 3 of the hose 1 contains is personalizable as a function of the requirements of each client. This two-dimensional code 3 is transferred to a drawing program which allows it to be vectored. Once the two-dimensional 3 is provided, the parameters of the laser, with which the work is to be carried out, are configured, for example the velocity of the engraving, the height of the lens, the power, etc. As a function of these parameters, the engraving will have greater or less definition, possibly being a few microns in depth (superficial engraving) or tens of millimeters (deep engraving).

With the engraving by laser, when part of the material of the external layer 2 of the hose 1 is removed, in this case silicone, a groove or a plurality of grooves 4 can be configured, forming the determined drawing or scheme of the two-dimensional code 3.

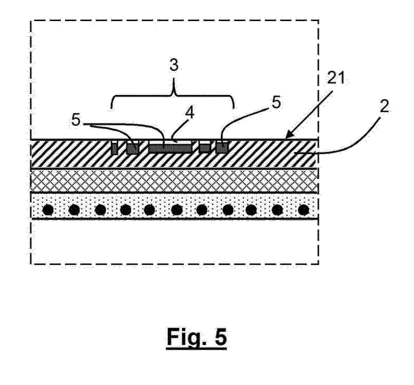

The engraving on silicone, whether it is superficial or deep, is difficult to observe with the naked eye, thus to make it stand out, the space formed by the grooves 4 is filled (see Figs. 1 and 3) with a filler material 5 with a colored polymeric base which produces a visual contrast with the rest of the external surface 21 of the external layer 2. The result of filling the grooves 4 can be observed in Figs. 2, 4 and 5. Preferably the ink which constitutes the filler material 5 occupies the entire hollow space engraved by the laser, as in Fig. 4, where the ink reaches the same level as the external surface 21 of the rest of the hose 1. Alternatively, as shown in Fig. 5, the filler material 5 may partially occupy the space formed by the grooves 4, although the fill level must be such that the user can clearly see the drawing of the two-dimensional code 3, ensuring, for example a fill height above the halfway point of the depth of the engraving.

Advantageously, the filler material 5 is ink which comprises silicone as part of its composition, facilitating the establishing of a bond between the ink and the silicone of the walls and bottom of the grooves 4, that is to say, with the silicone of the external layer 2 of the hose 1, achieving excellent adherence.

Depending on the formulation of the ink, once the hollow space of the grooves 4 engraved by the laser has been filled, it may or may not be necessary to cure the area of the hose 1 which has the code 3. The curing may be realized by means of any known heat source (for example an oven) at a curing temperature of between 100 °C and 180 °C, for example at 160 °C, over a period of between 3 and 15 minutes for normal hose sections 1.

Following the method described, the correct reading of the data stored in the two-dimensional code 3 is ensured by means of the use of any reader device authorized for this purpose, such as a mobile, PDA, USB reader, etc., ensuring traceability of the manufactured tubular hose 1 at all times, even in the most adverse conditions in which the hose 1 may be operating.

Lastly, it should be mentioned that the code 3 engraved and subsequently filled with the filler material 5 is preferably a two-dimensional code 3, for instance a QR-code code 3, although other types of codes 3 are not ruled out, for instance, linear or one-dimensional codes, also referred as barcodes, product references codes and any kind of code as an optical machine-readable representation of data relating to the hose 1.

## Claims

1. A tubular hose (1) for transporting fluids in industrial installations which comprises an external layer (2) made of a polymeric material provided with a code (3) intaglio engraved using a laser on the external surface (21) of the external layer (2) formed by a plurality of grooves (4) arranged according to a pattern of the code (3), in which the grooves (4) are at least partially filled with a filler material (5) with a colored polymeric base which produces a visual contrast with the rest of the external surface (21) of the external layer (2).

2. The tubular hose (1) according to claim 1, wherein the polymeric material of the external layer (2) is silicone and wherein the filler material (5) is an ink which comprises silicone.

3. The tubular hose (1) according to claim 2, wherein the silicone of the ink of the filler material (5) is silicone which is curable by heating.

4. The tubular hose (1) according to claim 3, wherein the ink of the filler material (5) is curable at a temperature of between 100 °C and 180 °C.

5. The tubular hose (1) according to any one of the previous claims, wherein the filler material (5) completely occupies the hollow of the grooves (4) until the filler material (5) is level with the rest of the external surface (21) of the external layer (2).

6. The tubular hose (1) according to any one of the previous claims, wherein the code (3) is a two-dimensional code.

7. The tubular hose (1) according to any one of the previous claims, wherein a depth of the grooves (4) which form the code (3) is between 0.001 mm and 1 cm.

8. The tubular hose (1) according to any one of the previous claims, wherein the tubular hose (1) is a flexible hose.

9. A method for manufacturing a tubular hose (1) for transporting fluids in industrial installations, provided with a code (3) which comprises the steps of:
a) providing a tubular hose (1) comprising an external layer (2) made of a polymeric material;
b) intaglio engraving a code (3), using a laser on the external surface (21) of the external layer (2), forming a plurality of grooves (4) arranged according to a pattern of the code (3); and
c) at least partially filling the grooves (4) which form the code (3) with a filler material (5) with a colored polymeric base which produces a visual contrast with the rest of the external surface (21) of the external layer (2).

10. The method according to claim 9, wherein the polymeric material of the external layer (2) is silicone and wherein the filler material (5) is an ink which comprises silicone.

11. The method according to claim 10, wherein the ink of the filler material (5) is curable by heating and wherein after step c) follows a step d) for curing the ink in which the hose (1), or at least a part of the hose (1) which comprises the code (3), is exposed to a heat source until a curing temperature of the ink of the filler material (5) is reached.

12. The method according to claim 11, wherein the curing temperature of the filler material (5) is between 100 °C and 180 °C.

13. The method according to claim 12, wherein the curing time of the filler material (5) is between 3 and 15 minutes.

14. The method according to any one of claims 9 to 13, wherein in step c) the grooves (4) formed by the laser are completely filled with the filler material (5) until the filler material (5) is level with the rest of the external surface (21) of the external layer (2).

15. The method according to any one of claims 9 to 14, wherein the engraved code (3) is a two-dimensional code.

16. The method according to any one of claims 9 to 15, wherein the engraving of the code (3) in step b) is realized using a laser tube applying a laser beam displacement technique.
